# EUROPEAN PATENT APPLICATION

(11) **EP 3 474 549 A1**
(43) Date of publication of application: **24.04.2019**
(21) Application number: 17306427.0
(22) Date of filing: 20.10.2017
(51) Int. Cl.: H04N 19/46, H04N 19/80, H04N 19/597, H04N 21/81, H04N 13/00, H04N 19/59

(54) **OMNIDIRECTIONAL VIDEO SLICE SEGMENTATION**

(71) Applicant: Thomson Licensing, 92130 Issy-les-Moulineaux (FR)
(72) Inventor: RACAPE, Fabien, 35576 Cesson-Sévigné (FR); GALPIN, Franck, 35576 Cesson-Sévigné (FR); THOREAU, Dominique, 35576 Cesson-Sévigné (FR)
(74) Representative: Huchet, Anne

(57) **Abstract**

Methods and apparatus enable video coding and decoding related to omnidirectional video that has been packed into frames for coding or decoding. In an embodiment, the packed frames are stereo omnidirectional video images. These techniques enable different portions of the packed frames to be used for prediction of other portions, thus allowing greater coding efficiency. The portions used as reference can undergo resampling to give the reference portions a same sampling resolution as the portion being coded. In one embodiment, syntax is included comprising packing information, resampling information or other information. In another embodiment, syntax specifies horizontal resampling information, or other information related to prediction of the portions of video images.

## Description

### FIELD OF THE INVENTION

The following described aspects relate to the field of video compression generally and to the field of omnidirectional video, particularly.

### BACKGROUND OF THE INVENTION

Recently there has been a growth of available large field of view content (up to 360°). Such content is potentially not fully visible by a user watching the content on immersive display devices such as Head Mounted Displays (HMD), smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

### SUMMARY OF THE INVENTION

These and other drawbacks and disadvantages of the prior art are addressed by at least one of the described embodiments, which are directed to a method and apparatus for omnidirectional video slice segmentation, which improves the compacity of such content in the framework of frame packing, which includes both view points in the same coded frame.

In at least one of the described embodiments, the arrangement of stereo frames and accompanying syntax is redefined in the context of frame packing, such that portions of packed frames can use other portions as references, improving the final compression efficiency.

In at least one embodiment, there is provided a method. The method comprises steps for resampling portions of reference samples to enable prediction of portions of at least two video images representing at least two views of a scene at corresponding times; generating syntax for a video bitstream indicative of a packing structure of the portions of at least two video images into a frame; and, encoding the frame, the frame comprising the syntax.

In at least one other embodiment, there is provided a method. The method comprises steps for decoding a frame of video from a bitstream, the frame comprising at least two video images representing at least two views of a scene at corresponding times; extracting syntax from the bitstream indicative of a packing structure of portions of the at least two video images into a frame; resampling portions of reference samples used for predicting at least two video images from the decoded frame; and, arranging the decoded portions into video images of the at least two views.

In another embodiment, there is provided a method according to any of the aforementioned methods, wherein horizontal resampling is used for images representing two views.

In another embodiment, there is provided a method according to any of the aforementioned methods, wherein the syntax is located in a Sequence Parameter Set or Picture Parameter Set.

In another embodiment, there is provided a method according to any of the aforementioned methods, wherein the syntax conveys information regarding the horizontal resampling of reference samples.

In another embodiment, there is provided an apparatus. The apparatus comprises a memory and a processor. The processor is configured to perform any variation of the aforementioned method embodiments, for encoding or decoding.

According to another aspect described herein, there is provided a nontransitory computer readable storage medium containing data content generated according to the method of any one of the aforementioned method embodiments, or by the apparatus of any one of the aforementioned apparatus embodiments for playback using a processor.

According to another aspect described herein, there is provided a signal comprising video data generated according to the method of any one of the aforementioned method embodiments for coding a block of video data, or by the apparatus of any one of the aforementioned apparatus embodiments for coding a block of video data, for playback using a processor.

According to another aspect described herein, there is provided a computer program product comprising instructions which, when the program is executed by a computer, cause the computer to carry out the method of any one of the aforementioned method embodiments.

These and other aspects, features and advantages of the present principles will become apparent from the following detailed description of exemplary embodiments, which is to be read in connection with the accompanying drawings.

### BRIEF DESCRIPTION OF THE DRAWINGS

Figure 1 illustrates an exemplary system for encoding and decoding omnidirectional videos, according to a specific and non-limiting embodiment,
Figures 2-6 illustrate a system configured to decode, process and render immersive videos according to various embodiments,
Figures 7-9 represents a system with an immersive wall configured to decode, process and render immersive videos according to various embodiments, and
Figures 10-12 represent immersive video rendering devices according to various embodiments.
Figure 13A and 13B illustrate an example of projection from a spherical surface S onto a rectangular picture F,

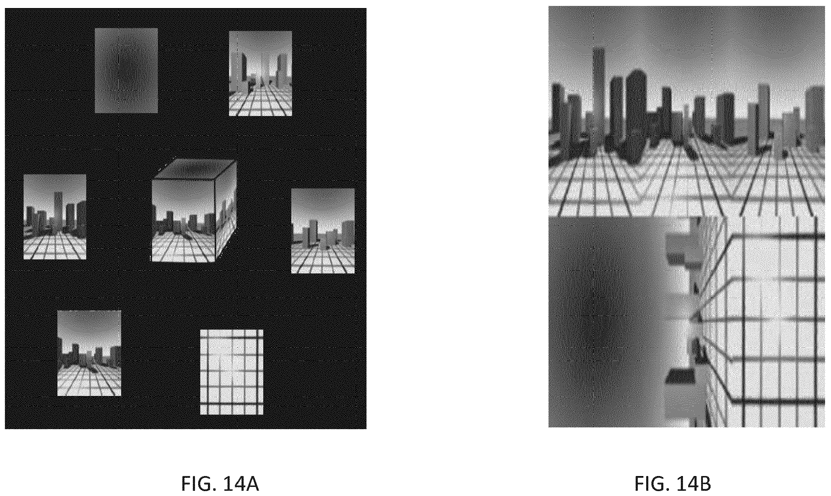

Figure 14A and 14B illustrate an example of projection from a cubic surface S onto six pictures, and a layout of the six faces of a cube projected on a 2D picture,
Figure 15A and 15B illustrate a moving object in a projected picture F of a 3D surface representing an omnidirectional video, and corresponding motion vectors in a block partitioning of the projected picture.
Figures 16A and 16B illustrate mapping from a frame coordinate to rendered frame, and from a rendered frame to an encoded frame.

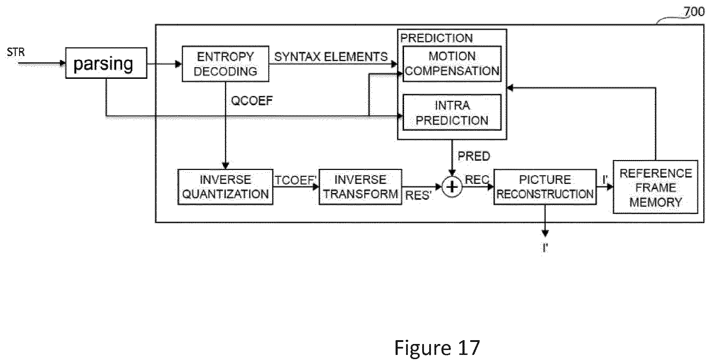

Figure 17 illustrates an example flow chart embodiment of a video decoder.

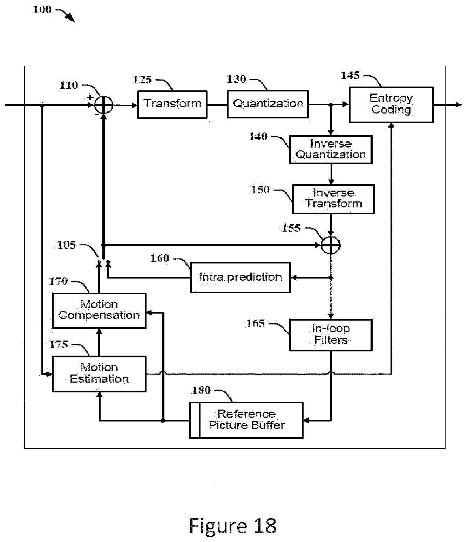

Figure 18 illustrates an example of an encoder to which the described aspects can be applied.

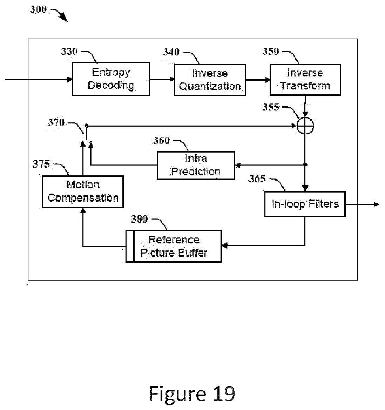

Figure 19 illustrates another example of a decoder to which the described aspects can be applied.
Figure 20 illustrates a classical block subdivision into square coding tree units (CTUs) using a quadtree splitting.
Figure 21 illustrates an equirectangular mapping, showing an intensity variation depicting horizontal pixel density at top, and at bottom, horizontal density as a function of vertical angle from the equator.
Figure 22 shows an example of two views with four portions, or tiles.
Figure 23 shows a distribution of tiles, or portions of images, whose horizontal sizes depend on the resolution of the pixels in the equirectangular frame.
Figure 24 shows an example of a packing distribution for a left view and a right view.
Figure 25 shows an example of slices in HEVC.
Figure 26 shows an example of tiles, slices, and slice segments in HEVC.
Figure 27 shows an example of correspondences of reference samples in case of intra prediction at a tile border.
Figure 28 shows an example of correspondence of reference samples in case where downsampling is needed.
Figure 29 shows an example of an unavailable coding tree unit (CTU) in a case of a classical wavefront in HEVC.

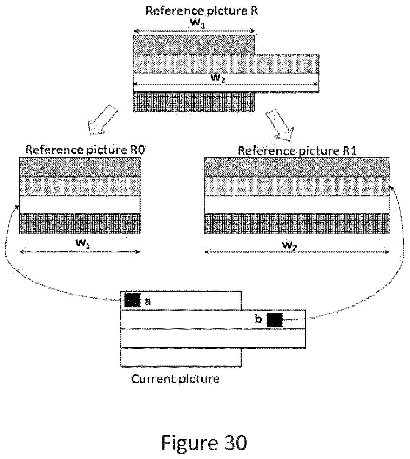

Figure 30 shows an example of multi-references for inter-prediction.
Figure 31 illustrates one embodiment of an encoding method according to the described aspects.
Figure 32 illustrates one embodiment of a decoding method according to the described aspects.
Figure 33 illustrates one embodiment of an apparatus for encoding or decoding according to the described aspects.

### DETAILED DESCRIPTION

Omnidirectional content is usually projected on a given layout, so that the final content to encode/decode fits in a rectangular frame, which is convenient for processing by existing codecs. Depending on the mapping, geometric distortions might be introduced which can hurt the compression performance. Especially, the motion vector prediction might not be adapted when dealing with ERP mapping. The following embodiments can be extended to other mappings with similar properties as well.

At least one of the embodiments described is used in designing new motion vector prediction adapted to omnidirectional video mapping. Several improvements are made upon prior techniques, notably a better way to handle temporal motion vector predictor or a rescaled motion vector predictor.

A large field of view content may be, among others, a three-dimension computer graphic imagery scene (3D CGI scene), a point cloud or an immersive video. Many terms might be used to design such immersive videos such as for example virtual Reality (VR), 360, panoramic, 4π, steradians, immersive, omnidirectional, large field of view.

An immersive video typically refers to a video encoded on a rectangular frame that is a two-dimension array of pixels (i.e., element of color information) like a "regular" video. In many implementations, the following processes may be performed. To be rendered, the frame is, first, mapped on the inner face of a convex volume, also called mapping surface (e.g., a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. Existing encoding and decoding methods usually do not take specificities of immersive videos into account. Indeed, as immersive videos can be 360° videos, a panning, for example, introduces motion and discontinuities that require a large amount of data to be encoded while the content of the scene does not change. Taking immersive videos specificities into account while encoding and decoding video frames would bring valuable advantages to the encoding or decoding methods.

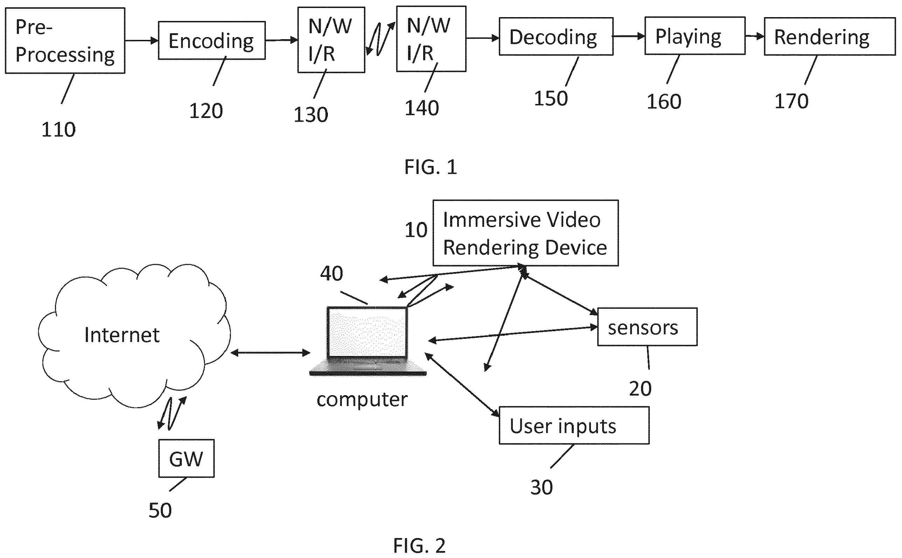

Figure 1 illustrates a general overview of an encoding and decoding system according to a specific and non-limiting embodiment. The system of figure 1 is a functional system. A pre-processing module 110 may prepare the content for encoding by the encoding device 120. The pre-processing module 110 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 110 may also accept an omnidirectional video in a particular format (for example, equirectangular) as input, and pre-processes the video to change the mapping into a format more suitable for encoding. Depending on the acquired video data representation, the pre-processing module 110 may perform a mapping space change.

The encoding device 120 and the encoding method will be described with respect to other figures of the specification. After being encoded, the data, which may encode immersive video data or 3D CGI encoded data for instance, are sent to a network interface 130, which can be typically implemented in any network interface, for instance present in a gateway. The data are then transmitted through a communication network, such as internet but any other network can be foreseen. Then the data are received via network interface 140. Network interface 140 can be implemented in a gateway, in a television, in a set-top box, in a head mounted display device, in an immersive (projective) wall or in any immersive video rendering device.

After reception, the data are sent to a decoding device 150. Decoding function is one of the processing functions described in the following figures 2 to 12. Decoded data are then processed by a player 160. Player 160 prepares the data for the rendering device 170 and may receive external data from sensors or users input data. More precisely, the player 160 prepares the part of the video content that is going to be displayed by the rendering device 170. The decoding device 150 and the player 160 may be integrated in a single device (e.g., a smartphone, a game console, a STB, a tablet, a computer, etc.). In other embodiments, the player 160 may be integrated in the rendering device 170.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g., a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality.

Figure 2 illustrates a particular embodiment of a system configured to decode, process and render immersive videos. The system comprises an immersive video rendering device 10, sensors 20, user inputs devices 30, a computer 40 and a gateway 50 (optional).

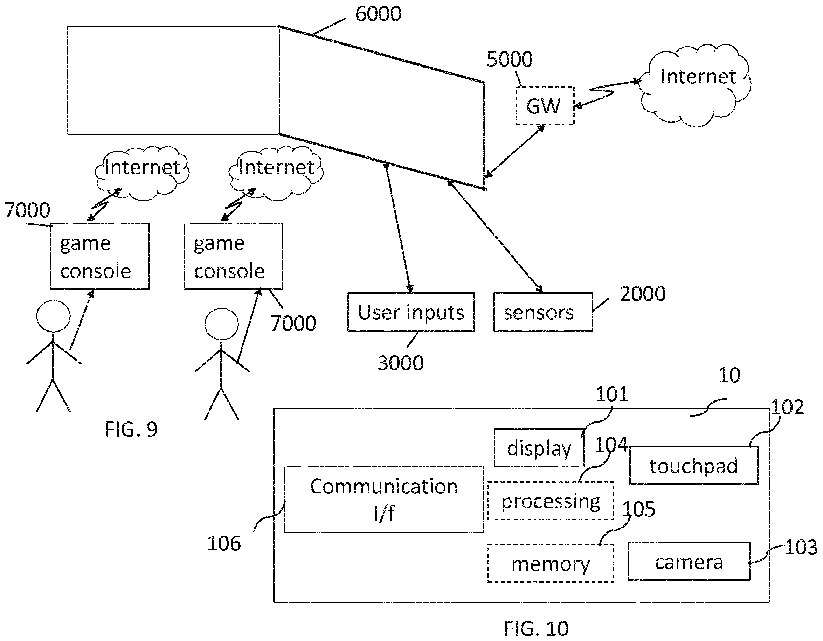

The immersive video rendering device 10, illustrated in Figure 10, comprises a display 101. The display is, for example of OLED or LCD type. The immersive video rendering device 10 is, for instance a HMD, a tablet or a smartphone. The device 10 may comprise a touch surface 102 (e.g., a touchpad or a tactile screen), a camera 103, a memory 105 in connection with at least one processor 104 and at least one communication interface 106. The at least one processor 104 processes the signals received from the sensors 20.

Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The communication interface 106 of the processing device may be wireline interfaces (for example a bus interface, a wide area network interface, a local area network interface) or wireless interfaces (such as a IEEE 802.11 interface or a Bluetooth® interface).

Computer 40 sends data and optionally control commands to the immersive video rendering device 10. The computer 40 is in charge of processing the data, i.e., prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g., decodes them and possibly prepares the part of the video content that is going to be displayed by the immersive video rendering device 10) and sends the processed data to the immersive video rendering device 10 for display. In another embodiment, the system may also comprise local storage (not represented) where the data representative of an immersive video are stored, said local storage can be on the computer 40 or on a local server accessible through a local area network for instance (not represented).

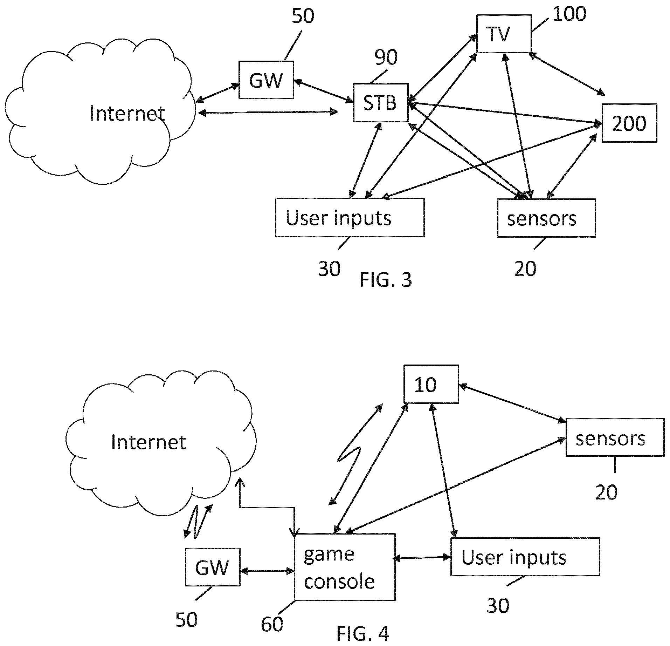

Figure 3 represents a second embodiment. In this embodiment, a STB 90 is connected to a network such as internet directly (i.e., the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to figure 2. The STB 90 obtains the data representative of the immersive video from the internet. In another embodiment, the STB 90 obtains the data representative of the immersive video from a local storage (not represented) where the data representative of the immersive video are stored.

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In another embodiment, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g., decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

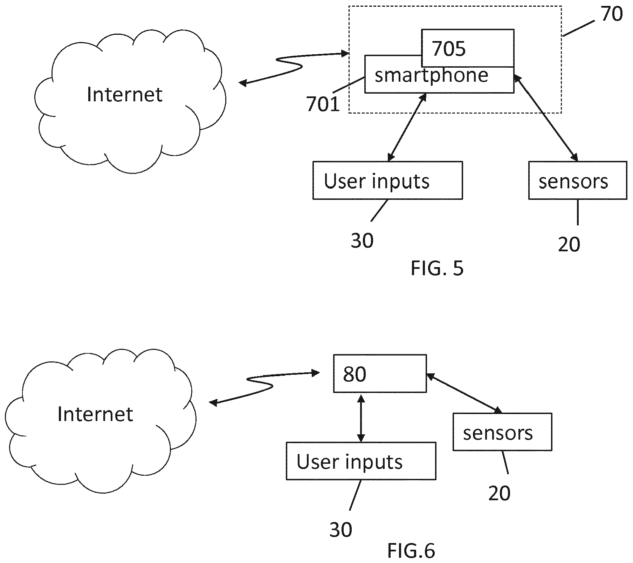

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage can be on the smartphone 701 or on a local server accessible through a local area network for instance (not represented).

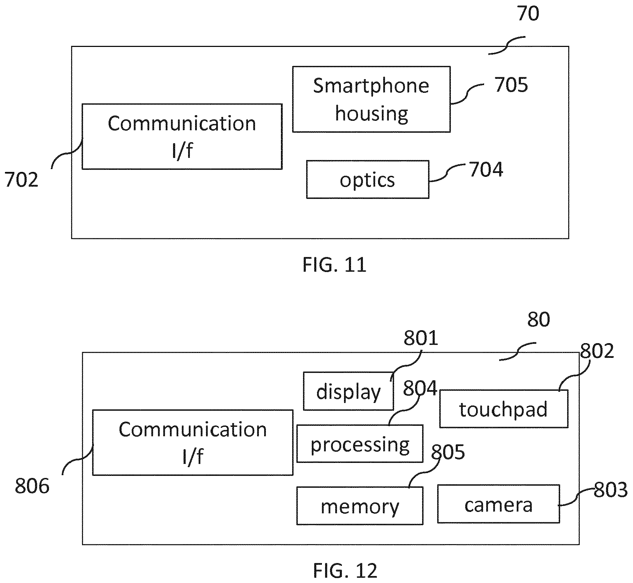

Immersive video rendering device 70 is described with reference to figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore, no display other than the one of the smartphone 701 is included. However, optics 704, such as lenses, are included for seeing the data on the smartphone display. The smartphone 701 is configured to process (e.g., decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g., decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated in figure 12. The immersive video rendering device comprises a display 801. The display can be for example of OLED or LCD type. The device 80 may comprise a touch surface (optional) 802 (e.g., a touchpad or a tactile screen), a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

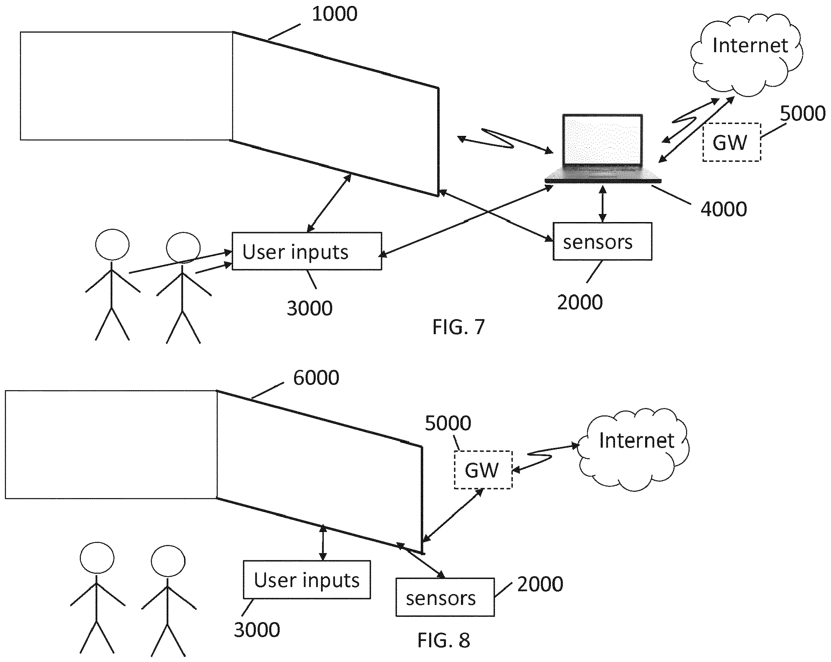

A second system, for processing augmented reality, virtual reality, or augmented virtuality content is illustrated in figures 7 to 9. Such a system comprises an immersive wall.

Figure 7 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In another embodiment, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g., position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e., preparing them for display, to be displayed by the immersive wall 1000. Processing can be done exclusively by the computer 4000 or part of the processing can be done by the computer 4000 and part by the immersive wall 1000.

Figure 8 represents another system of the second type. It comprises an immersive (projective) wall 6000 which is configured to process (e.g., decode and prepare data for display) and display the video content. It further comprises sensors 2000, user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g., position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

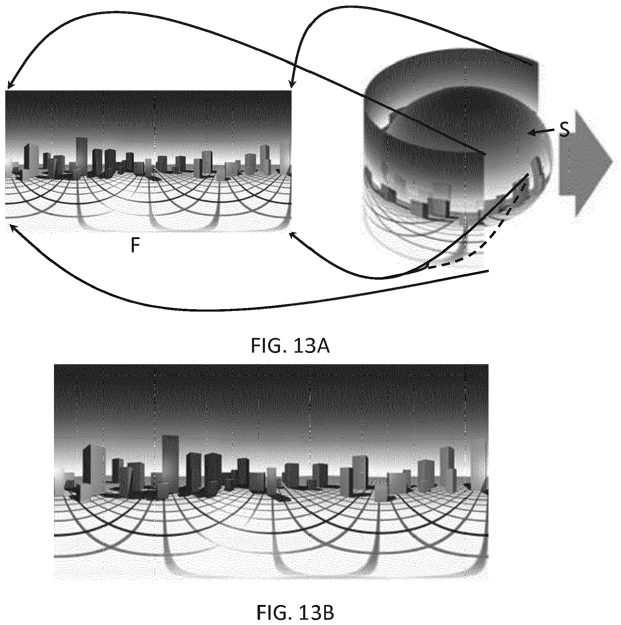

In one embodiment, we consider that the omnidirectional video is represented in a format that enables the projection of the surrounding three-dimensional (3D) surface S onto a standard rectangular frame F that is represented in a format suitable for a video codec. Various projections can be used to project 3D surfaces to two-dimensional (2D) surfaces. For example, figure 13A shows that an exemplary sphere surface S is mapped to a 2D frame F using an equi-rectangular projection (ERP), and figure 13B shows that an exemplary cube surface is mapped to a 2D frame using a cube mapping. Other mappings, such as pyramidal, icosahedral or octahedral mapping, can be used to map a 3D surface into a 2D frame. Such images require some new tools inside the video codec to consider the geometric properties of the image. An example of such tools is given in pending application "Motion transformation for VR". For these new tools, a flag is necessary to activate or not the tools. The syntax can then become too large and reduce the performance gain of the tools.

Another issue is that some of these tools can require additional processing and it is desirable to reduce the complexity when possible. Currently, the type of mapping used for a video is signaled without describing the use of a particular tool. A flag can be used, for example, in each coding unit to activate or deactivate the tool.

The 2D frame F can be encoded using existing video encoders, for example, encoders compliant with Google's VP9, AOMedia's AV1, MPEG-2 (ITU-T H.222/H.262), H.264/AVC (MPEG-4 Part 10, Advanced Video Coding), or H.265/HEVC (MPEG-H Part2, High Efficiency Video Coding). The 2D frame F can also be encoded with an encoder adapted to the properties of omnidirectional videos, for example, using an adapted VP9, VP10, MPEG-2, H.264/AVC, or H.265/HEVC encoder. After encoding and decoding, the decoded 2D frame can be mapped back to the corresponding 3D surface, for example, a sphere for an equi-rectangular mapping or a cube for cube mapping. The 3D surface can then be projected onto a "virtual screen" corresponding to a user's viewpoint in order to obtain the final rendered frame. The steps of decoding the 2D frame and projecting from the 3D surface to a rendered frame can be merged into a single step, where a part of the decoded frame is mapped onto the rendered frame.

For simplicity of notation, we may refer to the decoded 2D frame also as "F," and the 3D surface used in rendering also as S. It should be understood that the 2D frame to be encoded and the 2D frame to be decoded may be different due to video compression, and the 3D surface in pre-processing and the 3D surface in rendering may also be different. The terms "mapping" and "projection" may be used interchangeably, the terms "pixel" and "sample" may be used interchangeably, and the terms "frame" and "picture" may be used interchangeably.

The problem of mapping a three-dimensional (3D) surface to a rectangular surface has first been described for a typical layout of omnidirectional video, the equirectangular layout, but the general principle is applicable to any mapping from the 3D surface S to the rectangular frame F. The same principle can apply for example to the cube mapping layout.

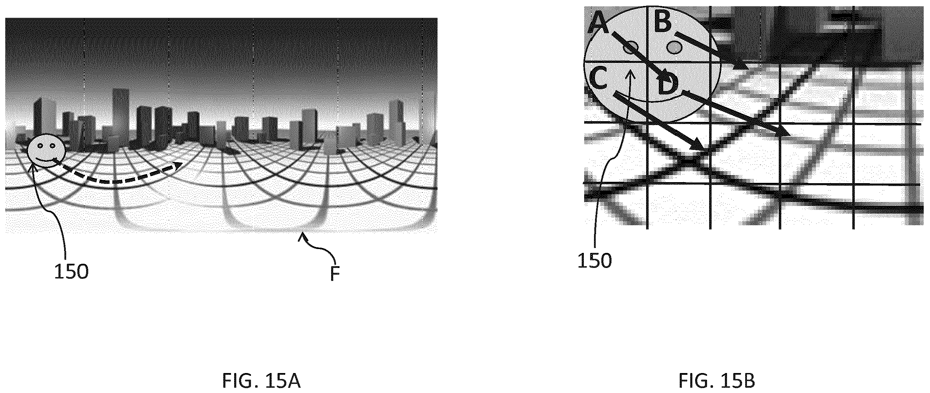

In Figures 15A and 15B, we show an example of an object moving along a straight line in the scene and the resulting apparent motion in the frame, shown by the dashed curve. The resulting motion vectors for an arbitrary Prediction Unit (PU) partition is shown on the right. As one can notice, even if the motion is perfectly straight in the rendered image, the frame to encode shows a non-uniform motion vector.

The domain of the described embodiments is the compression of 360° omnidirectional content and in particular the packing of stereo 360° videos. The equirectangular layout is one of the currently most used mapping for storing, compressing and processing the 360° captured scene. The mapping takes a spherical representation of the scene as input and maps it onto a rectangular frame, as depicted in Figure 13A. The purpose of the invention is to provide tools and syntax that adapt to omnidirectional content where the density of projected pixels varies over each coded frame. In an existing solution, the frame is split into different tiles that have different spatial resolution depending on their vertical location. This tiling makes the different regions independent in terms of prediction and context coding, reducing the compression efficiency.

The invention consists in providing syntax and tools for keeping the prediction tools operable even between tiles that have different resolutions. This syntax is light and prediction tools can easily adapt at tiles' borders for instance. The proposed syntax is easily adaptable at slice segment level for instance in the case of a successor to the HEVC (High Efficiency Video Coding, H.265) standard. The new tiled content has a reduced surface that is adapted to the characteristics of the omnidirectional video's resolution, and the compression efficiency is not dramatically reduced since prediction tools are not disabled at tile borders.

Stereo 360° means that two omnidirectional views are produced from two different viewpoints, resulting in two different equirectangular frames. The surfaces might be, for example, a sphere with a varying center depending on the direction in Euler space. Parts of these described embodiments aim at improving the compaction of such stereo content in the framework of frame packing, which consists in including both view points in the same coded frame.

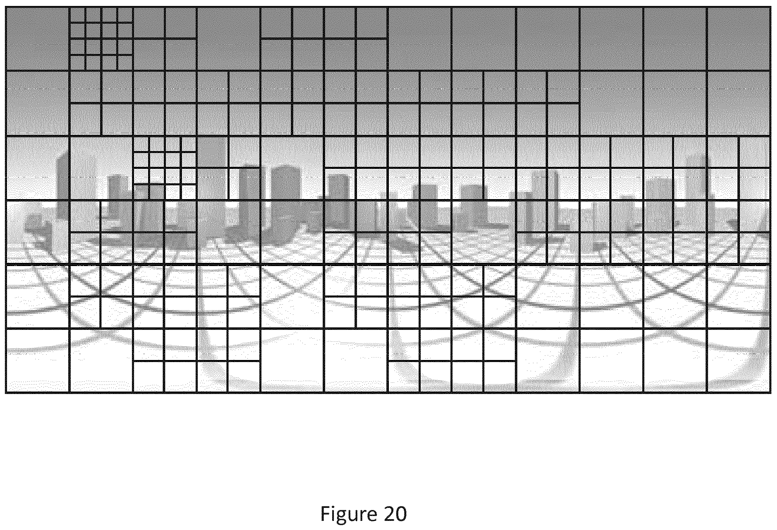

Recent video compression standards process frames of video block by block. The size of the blocks is chosen by the encoder, depending on criteria such as compression efficiency and complexity. Figure 20 depicts an exemplary decomposition, typical of the HEVC standard, where each 64x64 Coding Tree Block (CTB) is split into Coding Blocks (CB), following a quadtree structure.

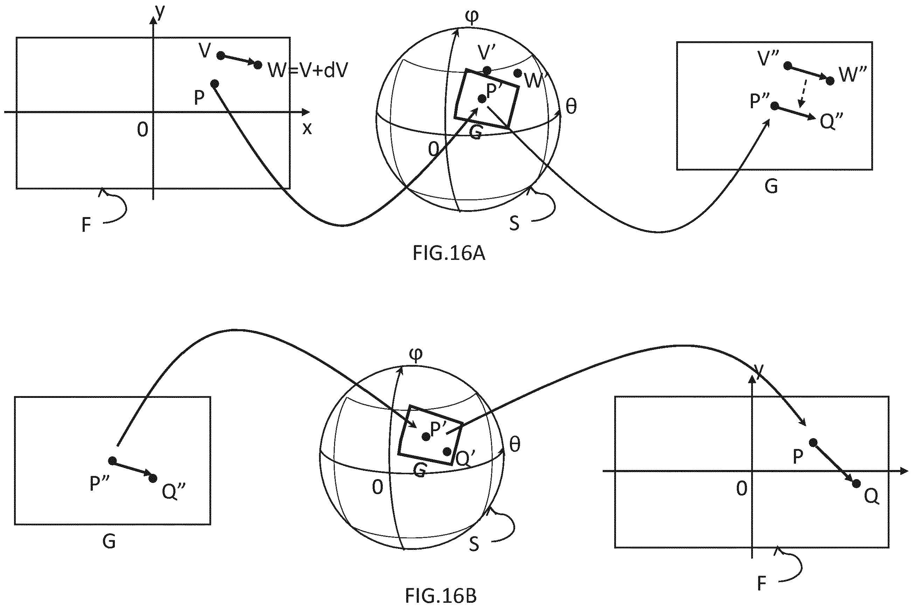

Among the omnidirectional video layouts, the equi-rectangular is one of the most popular due to the convenient mapping of the sphere to a continuous rectangular frame. In the following, the equirectangular frame is called F and a rendered frame to be displayed is denoted G, as depicted in Figure 16A. A given point P in F, is mapped at position P' on the sphere, and corresponds to the point P" in a rendered frame. The rendered frame is a rectangular image to be displayed, for instance, in a Head Mounted Display for 360° immersive experience. Its position depends on where the user is looking at.

However, this mapping has some drawbacks regarding video compression since the density of pixels in that rectangle is stationary, although the resolution should vary along the vertical axis to produce a constant resolution in the rendered frames. Figure 16A shows this relation with the equirectanglar frame F, on the left, and the corresponding density as a function of the "latitude" of vertical position. At the latitude 0, the density is the highest and decreases along the vertical axis. In other words, the width of each pixel in a rendered frame increases with the distance to the "equator" (or y=0).

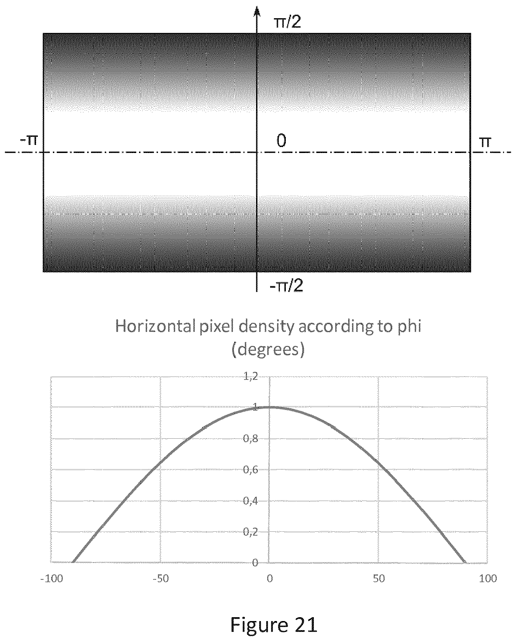

Figure 21 shows an equirectangular mapping. The width of each pixel in the rendered frame projection G is shown as a function of the vertical position. At top, the intensity depicts the pixel horizontal density, with darker shades being lower density. At bottom, the horizontal density as a function of the vertical angle from the equator.

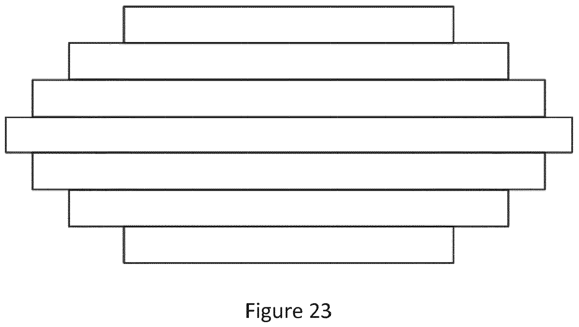

The codecs process frames of video block by block, as depicted in Figure 20. It appears relevant to cut the video vertically, block wise, in order to keep a solution compatible with existing designs. Figure 23 shows a possible distribution, where the image is no more "rectangular" but split in "tiles", whose horizontal sizes depend on their vertical position. It should be noted that the wording "tiles", here, denotes the rectangular regions sharing the same sampling and should not directly refer to the definition of tiles in HEVC, which defines specific conditions for coding. In the following, the tiles in HEVC will explicitly be called HEVC tiles.

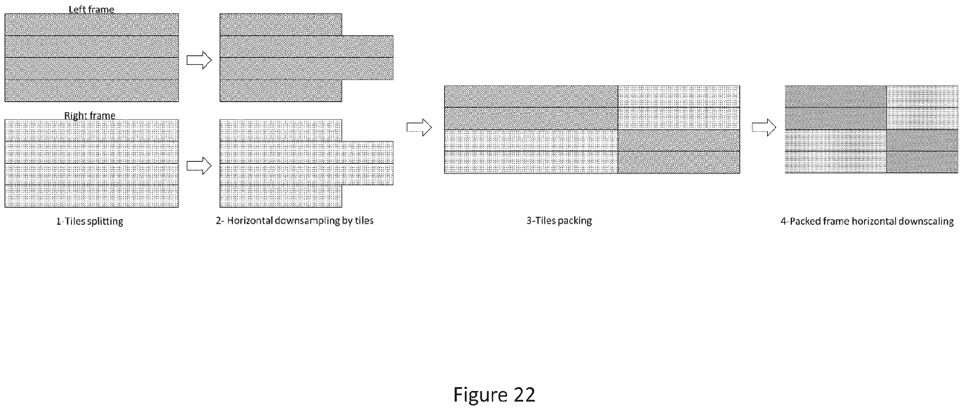

Figure 22 depicts a left and a right frame and shows the process of these frames being portioned into four tiles per frame, and an exemplary frame packing method.

The original equirectangular content in Figure 23 is horizontally sub-sampled, depending on the tile location. This process allows one to reduce the surface of the signal to be compressed, without dramatically losing information since the rendered frames' quality, which is what matters, won't be much impacted since the resolution was already low, due to the mapping itself.

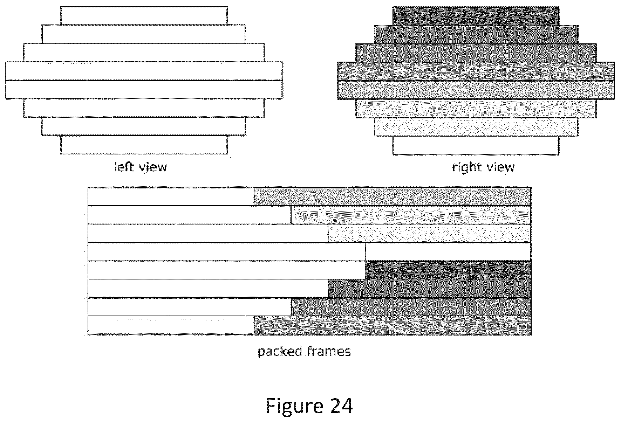

This distribution has to then be organized to fill a rectangular frame, to be efficiently compressed. In the case of frame packing, two sets of tiles have to be distributed. Figure 24 gives an exemplary distribution with the left view in white and the right view represented with several shades of grey. The tiles of the left view are shifted to be horizontally aligned to the left and the tiles of the right view are packed on the right to create a rectangle frame. The right distribution of tiles is split at the middle, vertically, to create an overall rectangle shape with the left view.

In the proposed similar distribution in the literature, the tiles are considered independent, which dramatically reduces the potential performance of codecs when coding such frame. The described embodiments herein propose to not completely separate the different tiles and thus allow inter tile prediction, using the following tools.

First, the distribution has to be signaled if we want the tools to adapt to it.

In HEVC, each frame is partitioned into non-overlapping CTUs of 64x64. The size of this basic block for coding has varied from 16×16 in H.264 to 256x256 in the current model for next generation video coding (H.266). However, this does not seem to be the appropriate granularity.

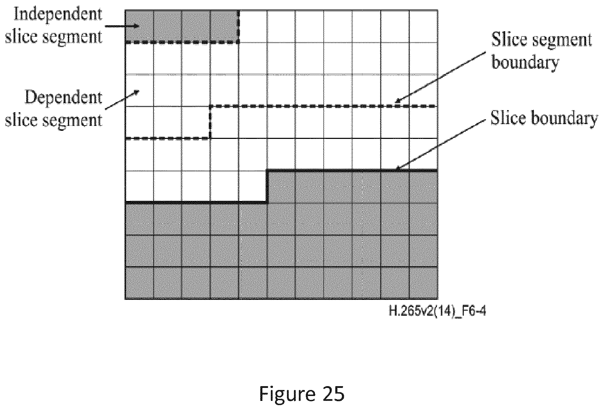

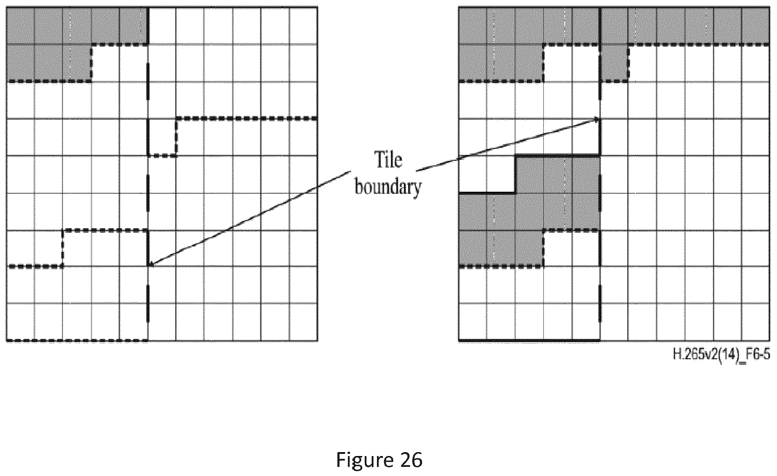

Figure 25 depicts the partitioning of frames in slices in HEVC, which can themselves be partitioned into slice segments. Slices as well as HEVC tiles are independent in terms of compression tools like prediction and contextual coding. They contain consecutive CTUs in the raster scan order, whereas HEVC tiles are rectangles that modify the scanning of CTUs in the frame, which then follows a raster scan order per tile as depicted in Figure 26.

A slice can be divided in slice segments as depicted in Figure 25 and Figure 26. An independent slice segment starts the slice in the raster scan order, followed by dependent slice segments. Whereas slices can be decoded independently, there is no break on the spatial prediction dependencies at slice segment borders. It is then possible to provide information about sampling in a slice segment header, and keep the efficiency of intra prediction, using the proposed adaptations described below.

In a first embodiment, the structure in Figure 24 could be flagged directly in high-level syntax, such as Sequence Parameter Set or Picture Parameter Set. The information about each tile could then be derived, knowing its address given by its header syntax element: slice_segment_address.

In a second embodiment, syntax elements are added to the slice segment header which give the horizontal spatial resolution of the given slice segment. It can be expressed as a ratio of the total width or a number of CTUs. Table 1 shows a part of the slice segment header syntax in HEVC. Some elements' presence depends on whether the segment is dependent or leading the slice. The independent slice segments can be decoded independently. The dependent slice segments contain a reduced header and require the syntax elements from the leading independent slice segment. In both cases, the horizontal resolution can be updated via an element: slice_segment_horizontal_resolution, for example. This syntax element should be part of dependent slice segments in case we want to update the resolution and enable intra prediction at slice segments' borders.

**Table 1: exemplary slice segment header syntax**

| slice_segment_header() { | **Descriptor** |
|---|---|
| **first_slice_segment_in_pic_flag** | u(1) |
| if(nal_unit_type >=BLA_W_LP&& nal_unit_type <=RSV_IRAP_VCL23) | |
| **no_output_of_prior_pics_flag** | u(1) |
| **slice_pic_parameter_set_id** | ue(v) |
| if(!first_slice_segment_in_pic_flag){ | |
| if(dependent_slice_segments_enabled_flag) | |
| **dependent_slice_segment_flag** | u(1) |
| **slice_segment_address** | u(v) |
| } | |
| if(!dependent_slice_segment_flag) { | |
| for(i = 0; i < num_extra_slice_header_bits; i++) | |
| **slice_reserved_flag[i**] | u(1) |
| **slice_type** | ue(v) |
| ... | |
| } | |
| ... | |
| **slice_segment_horizontal_resolution** | u(7) |
| ... | |
| if(slice_segment_header_extension_present_flag) { | |
| **slice_segment_header_extension_length** | ue(v) |
| for(i = 0; i < slice_segment_header_extension_length; i++) | |
| **slice_segment_header_extension_data_byte**[ i ] | u(8) |
| } | |
| byte_alignment() | |
| } | |

The partitioning depicted in Figure 24 could also benefit from the HEVC tile feature that stops the raster scan before the end of the frame, horizontally. Indeed, the right tile has different content which may affect the coding. The contexts would be more consistent if they followed each constituent frame. Moreover, at the border, each right tile is hardly predictable from its neighbor from content that comes from a different part of the shot and images having a different resolution.

As it is undesirable to have HEVC tiles per tile and have constituent frames that are not rectangular, it would need a more flexible tiling that follows each constituent frame.

For intra-coding, intra-compression tools can be adapted in order to not lose all of the potential redundancies between tiles. The wording "tile" describes here the rectangular shapes of pixels, but does not relate to the specific tiles in HEVC.

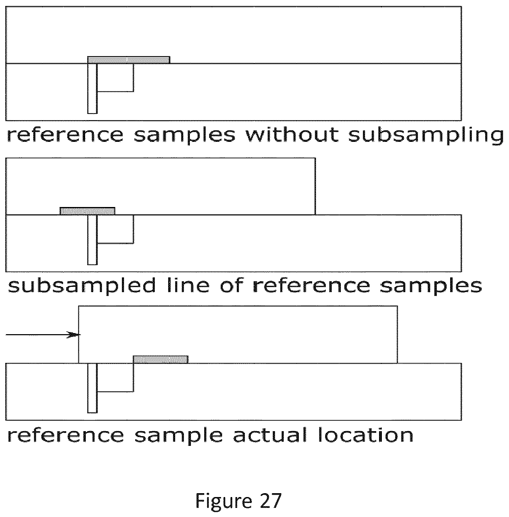

First, a dedicated horizontal up-sampling stage can be used to at least get appropriate corresponding samples for intra prediction between neighboring tiles. In the case of intra block copy prediction or any other prediction tool that would require a predictor region at the same resolution as the current block to be predicted, resampling is required. Figure 27 depicts how to look for the reference samples for a current prediction block that would require intra prediction from the upper tile. One can see that the operation does not only require upsampling of the neighboring pixels, the entire upper line of pixels is stretched. In this case, the reference samples in gray are located as depicted in the middle and the bottom drawings of Figure 27. Then, they need to be upsampled to get the line of reference samples at the same resolution as the current prediction block.

During the decoding process, a Look Up Table that gives the new position of reference samples in the neighboring tile, can be searched for a given current prediction block. An interpolation stage would then allow getting the final reference samples. In HEVC for example, the reference samples are often smoothed to produce a smooth prediction that prevents it from diverging from the source signal and lets the following transforms to deal with the residuals. In this case, the interpolation due to the upsampling requirement represents a minor issue.

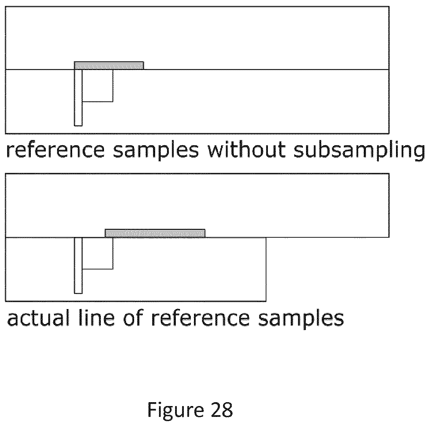

For the other case where the reference samples have to be downsampled, as depicted in Figure 28, the same mechanism can be set. Down sampling is even less problematic regarding the relevance of generated reference samples.

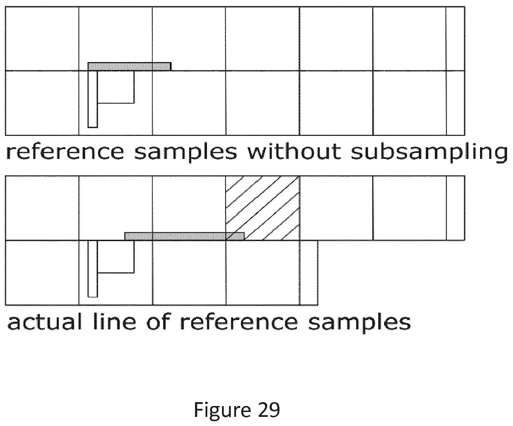

However, it raises the issue of the availability of the above line of CTUs. If tools such as wavefront parallel processing (WPP) are used, this configuration would require information to modify the conditions for starting the next line of CTUs. Figure 29 shows an exemplary distribution, where the reference samples would belong to 3 CTUs in the upper tile. Without any change of the wavefront, the hatched CTUs are not available at the time of decoding the current block. Indeed, one CTU ahead of the current one horizontally has been decoded at that time.

In this case, the scheme can be constrained to start when the required CTUs are decoded, two CTUs ahead of the current one on the horizontal axis in the exemplary case depicted in Figure 29.

The default wavefront requires decoding the CTU at index x+1 (horizontally) in the above tile in order to start the decoding of the current CTU at x. With adapted width tiles, if the above tile has a width of w1, and the current tile a width of w2, the wavefront should require the decoding of CTU w1/w2*(x+1).

For inter-prediction, in a first embodiment, images stored in the decoded picture buffer can be reconstituted at the desired resolution to enable cross tile prediction. Note that, not only YUV samples values, but also other temporally predicted components, like motion vectors, for example, need to be up sampled accordingly.

In a second embodiment of inter-prediction, to avoid up and down or down and up sampling, several images of references can be generated and stored in the DPB. As depicted in figure 12, for temporal prediction, depending on the tile of the current coding unit (CU) to encode/decode, the appropriate reference picture is used. For example, for a block a in the first tile of width w1, the reference picture R0 of width w1 is used. This reference picture is generated by downscaling tiles of width greater than w1. Similarly, a block b of tile of width w2 will use the R1 picture of width w2 where tiles have been scaled appropriately.

The deblocking filters in the classical approach also need to be modified.

In another embodiment, the filters can be disabled at least at tile borders. In HEVC, it is possible to allow deblocking at HEVC tiles and slice borders via the syntax elements loop_filter_across_tiles_enabled_flag and loop_filter_across_slice_enabled_flag respectively, included in the Picture Parameter Set. In one described embodiment, it is proposed to add an element loop_filter_across_slice_segment_enabled_flag: **pps_loop_filter_across_slice_segments_enabled_flag** equal to 1 specifies that in-loop filtering operations may be performed across left and upper boundaries of slice segments referring to the PPS. When pps_loop_filter_across_slices_enabled_flag is equal to 0, it specifies that in-loop filtering operations are not performed across left and upper boundaries of slice segments referring to the PPS. The in-loop filtering operations include the deblocking filter and sample adaptive offset filter operations.

In another embodiment, the signal from a neighboring tile can also be up/down sampled before applying the deblocking filter, so that the content matches at the border.

In either the inter-prediction or intra-prediction cases, the syntax in a video bitstream described above and indicative of the packing structure of portions of at least two views of video images can be used for the resampling and/or the prediction. Resampling refers to changing the sampling structure of a signal, which could mean upsampling, downsampling, interpolation, or some combination of these operations.

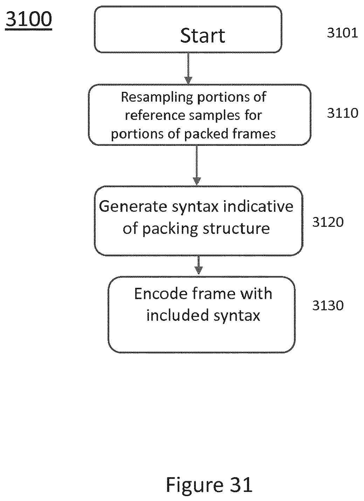

Figure 31 shows one embodiment of a method 3100 under the aspects described. The method commences at Start block 3101 and control proceeds to block 3110 for resampling portions of reference samples for video images representing at least two views of a scene at corresponding times. Control proceeds from block 3110 to block 3120 for generating syntax for a bitstream indicative of the packing structure of the portions of at least two video images into a frame. Control then proceeds from block 3120 to block 3130 for encoding the frame, the frame comprising the syntax.

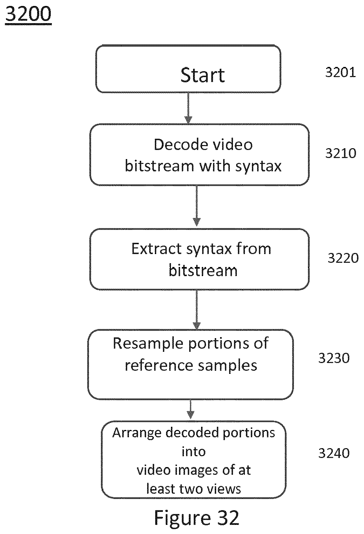

Figure 32 shows one embodiment of a method 3200 under the aspects described. The method commences at Start block 3201 and control proceeds to block 3210 for decoding a video bitstream, also comprising a syntax element. Control proceeds from block 3210 to block 3220 for extracting syntax from the decoded bitstream. Control proceeds from block 3220 to block 3230 for resampling portions of reference samples for the at least two views. Control proceeds from block 3230 to block 3240 for arranging decoded portions of the at least two video images.

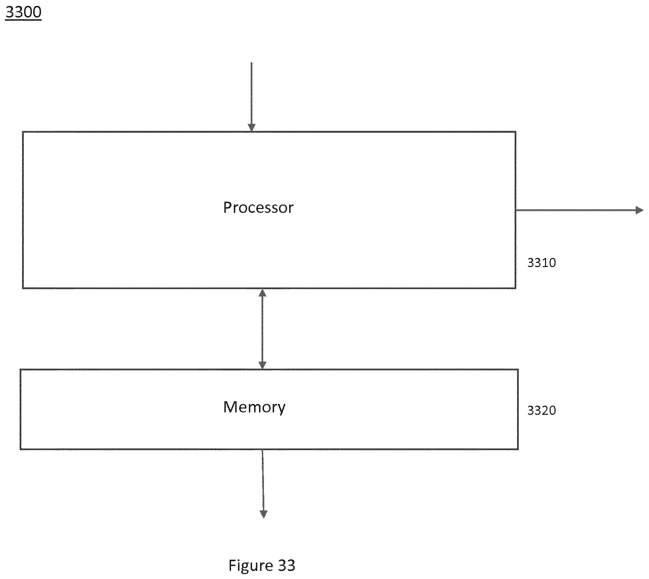

Figure 33 shows one embodiment of an apparatus 3300 for coding or decoding a block of video data. The apparatus comprises Processor 3310 which has input and output ports and is in signal connectivity with Memory 3320, also having input and output ports. The apparatus can execute any of the aforementioned method embodiments, or variations.

The functions of the various elements shown in the figures can be provided using dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

The present description illustrates the present ideas. It will thus be appreciated that those skilled in the art will be able to devise various arrangements that, although not explicitly described or shown herein, embody the present ideas and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

In the claims herein, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, methods and apparatus to enable tools and operations for video coding related to packed frames representing omnidirectional video. In an embodiment, the packed frames are stereo omnidirectional video images. These techniques enable different portions of the packed frames to be used for prediction of other portions, thus allowing greater coding efficiency. In one embodiment, syntax is included comprising packing information, resampling information or other information. In another embodiment, syntax specifies horizontal resampling information, or other information related to prediction of the portions of video images.

## Claims

1. A method, comprising:
resampling portions of reference samples to enable prediction of portions of at least two video images representing at least two views of a scene at corresponding times;
generating syntax for a video bitstream indicative of a packing structure of said portions of at least two video images into a frame; and,
encoding the frame, said frame comprising said syntax.

2. A method, comprising:
decoding a frame of video from a bitstream, said frame comprising at least two video images representing at least two views of a scene at corresponding times;
extracting syntax from said bitstream indicative of a packing structure of portions of said at least two video images into a frame;
resampling portions of reference samples used for predicting at least two video images from said decoded frame; and,
arranging said decoded portions into video images of the at least two views.

3. An apparatus for coding at least a portion of video data, comprising:
a memory, and
a processor, configured to perform:
resampling portions of reference samples to enable prediction of portions of at least two video images representing at least two views of a scene at corresponding times;
generating syntax for a video bitstream indicative of a packing structure of said portions of at least two video images into a frame; and,
encoding the frame, said frame comprising said syntax.

4. An apparatus for decoding at least a portion of video data, comprising:
a memory, and
a processor, configured to perform:
resampling portions of reference samples to enable prediction of portions of at least two video images representing at least two views of a scene at corresponding times;
including syntax in a video bitstream indicative of a packing structure of said portions of at least two video images into a frame; and,
encoding the frame, said frame comprising said syntax.

5. The method of Claim 1 or 2, or the apparatus of Claim 3 or 4, wherein said syntax is in a Sequence Parameter Set or Picture Parameter Set.

6. The method of Claim 1 or 2, or the apparatus of Claim 3 or 4, wherein said syntax is in a slice segment header.

7. The method or the apparatus of Claim 6, wherein said syntax gives horizontal spatial resolution of a slice segment.

8. The method of Claim 1 or 2, or the apparatus of Claim 3 or 4, wherein the at least two views are part of a stereo omnidirectional frame.

9. The method of Claim 1 or 2, or the apparatus of Claim 3 or 4, wherein reference samples are horizontally upsampled.

10. The method or the apparatus of Claim 9, wherein said reference samples are from an upper neighboring line of pixels.

11. The method of Claim 1 or 2, or the apparatus of Claim 3 or 4, wherein said resampling makes said reference samples the same resolution as a current line of pixels.

12. The method of Claim 1 or 2, or the apparatus of Claim 3 or 4, wherein said prediction is temporal and resampling of other temporally predicted components is performed.

13. A non-transitory computer readable medium containing data content generated according to the method of any one of claims 1 and 5 to 12, or by the apparatus of any one of claims 3 and 5 to 12, for playback using a processor.

14. A signal comprising video data generated according to the method of any one of claims 1 and 5 to 12, or by the apparatus of any one of claims 3 and 5 to 12, for playback using a processor.

15. A computer program product comprising instructions which, when the program is executed by a computer, cause the computer to carry out the method of any one of claims 1, 2 and 5 to 12.
